# EUROPEAN PATENT APPLICATION

(11) **EP 1 563 934 A1**
(43) Date of publication of application: **17.08.2005**
(21) Application number: 05445001.0
(22) Date of filing: 03.01.2005
(51) Int. Cl.: B23B 29/02, B23C 5/00

(54) **Tool holder and method of making**

(30) Priority: 04.02.2004 US 770515
(71) Applicant: Valenite LLC, Madison Heights, MI 48071-9636 (US)
(72) Inventor: Kocherovsky, Yevgeny, West Bloomfield Michigan (US)
(74) Representative: Taquist, Lennart

(57) **Abstract**

A tool holder includes a plurality of portions (10,12) arranged in end-to-end relationship and interconnected by friction weld to form a unitary assembly subjected to a heat treatment. The portions formed of different respective materials have different mass properties and/or different chemical compositions. A front-most one of the portions constitutes a cutter head portion (12), and a rear-most one of the portions constitutes a mounting portion (10). The cutter head portion can be in the form of an unfinished blank which is subsequently machined. A third portion, e.g. of aluminum, could be provided to minimize the weight of the tool holder.

## Description

### BACKGROUND OF THE INVENTION

The present invention relates to tool holders for attaching cutting tools to machine tools, and to unfinished multi-metal blanks for making such tool holders.

A tool holder for performing metal cutting operations typically comprises a rear mounting portion, such as a shank, which can be connected to a machine tool, and a front cutter head portion which supports a cutter edge. The cutter edge can be formed directly in the cutter head portion, or the cutter edge can be provided on an indexible cutting insert mounted either directly on the cutter head portion or indirectly thereon via a cartridge. The holder can be of the stationary type or the rotatable type, depending upon the particular cutting operation involved, e.g., stationary for turning operations, and rotatable for milling and drilling operations.

Tool holders have been in use which are formed of a single body, i.e., wherein both the front and rear portions are formed of the same material, such as steel, and thus have the same mass properties and chemical composition. A shortcoming of such a structure is that it may be desirable for the front portion to have different mass properties and/or chemical composition than the rear portion, due to their different functions.

One solution to that problem involves making the front and rear portions of different materials (having different mass properties and/or chemical composition) and then coupling the front and rear portions together, usually by a threaded connection. However, such a structure is not as strong as would be desired. Also, if the tool holder were rotated in a direction opposite the thread, the front and rear portions could become unscrewed, so a given tool holder is designed for either a right-handed torque application or a left-handed torque application, but not for both.

Therefore, it would be desirably to provide such a tool holder that is of increased strength and which can be used for both right-handed and left-handed torque applications.

### SUMMARY OF THE INVENTION

One aspect of the present invention involves a tool holder which comprises a plurality of portions arranged in end-to-end relationship and interconnected by friction weld to form a unitary assembly subjected to a heat treatment. The portions formed of different respective materials have different mass properties and/or different chemical compositions. A front-most one of the portions constitutes a cutter head portion, and a rear-most one of the portions constitutes a mounting portion.

In one embodiment of the invention there are only two of the portions, and in another embodiment of the invention there are more than two portions, preferably three portions, wherein an intermediate portion is formed of aluminum to reduce the overall weight of the tool holder.

Another aspect of the invention involves a method of producing the tool holder which comprises the steps of:
A) providing a plurality of portions comprised of respective materials having different mass properties and/or different chemical compositions;
B) placing the plurality of portions in end-to-end relationship along a central axis;
C) friction welding the plurality of portions together to form a unitary assembly, wherein a rear-most one of the portions constitutes a mounting portion, and a front-most one of the portions constitutes a cutter head; and
D) heat treating the unitary assembly.

### BRIEF DESCRIPTION OF THE DRAWINGS

The objects and advantages of the invention will become apparent from the following detailed description of preferred embodiments thereof in connection with the accompanying drawings in which like numerals designate like elements and in which:

Fig. 1 is an exploded side view of a first embodiment of a tool holder according to the invention, wherein the tool holder consists of two portions.

Fig. 2 is a side view after the portions of Fig. 1 have been friction welded together.

Fig. 3 is a view similar to Fig. 1 of a second embodiment wherein the tool holder consists of three portions.

Fig. 4 is a view similar to Fig. 3 after the portions have been friction welded.

Fig. 5 is a side view of a third embodiment according to the invention.

Fig. 6 is a side view of a fourth embodiment according to the invention.

Fig. 7 is a side view of a fifth embodiment according to the invention.

### DESCRIPTION OF PREFERRED EMBODIMENTS OF THE INVENTION

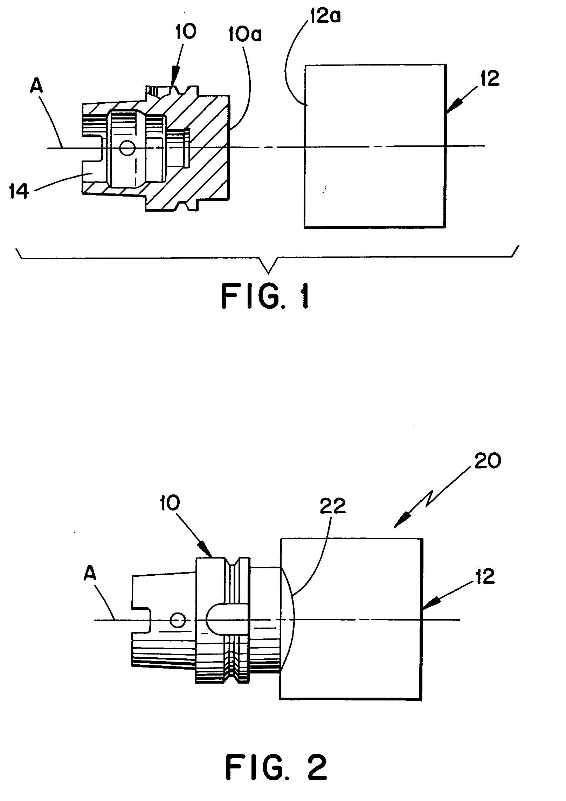

Depicted in Fig. 1 are a rear portion 10 and an unfinished front portion 12 which are to be joined in order to form a semi-finished tool holder, wherein the rear portion 10 would constitute a mounting portion, and the front portion would constitute a cutter head portion. The rear portion 10 is of generally conventional shape, and may include a center recess 14 for receiving a drive tongue of a machine tool (not shown) in order to mount the tool holder. The front and rear portions are formed of respective materials having different mass properties and/or different chemical compositions that are suited to their particular functions.

The rear portion can be formed of a conventional material for such mounting portions, such as steel H13, for example.

The front portion 12 is unfinished and, after being secured to the rear portion 10, would be machined to a desired shape. The front portion 12 is formed of a conventional material for such cutter heads, such as steel 4340 or carbide for example.

To interconnect the front and rear portions 10, 12, those portions are brought together in end-to-end fashion along a center line A and subjected to a conventional friction welding operation wherein there is produced relative rotation between the front and rear portions 10, 12 about the center line A (e.g., by holding the front portion 12 stationary and rotating the rear portion 10), while the mutually abutting surfaces 10a, 12a of those portions are pressed together. There results a frictional heating and plastic deformation of the surfaces 10a, 12a which, after the rotation is stopped and the front and rear portions continue to be pressed together, eventually produces a coalescence of the front and rear portions to create a high-integrity unitary assembly 20 (Fig. 2). A fusion line 22 where the fused materials meet is represented schematically in Fig. 2.

The rotation that produces the frictional welding can be of constant speed during the welding process. Alternatively, an inertial-type friction welding can be performed wherein one of the front and rear portions 10, 12 is fixed and the other is connected to a flywheel which is accelerated to high speed, thereby storing the required energy. The drive to the flywheel is then disengaged, whereupon the front and rear portions are pressed together. The engaged surfaces are frictionally heated and plastically deformed in the manner explained above, as the flywheel gradually decelerates.

The unitary assembly resulting from the friction weld exhibits greater integrity than previous assemblies that were interconnected by a screw thread. Also, the welded assembly 20 can be rotated in either direction without risk of the front and rear portions becoming uncoupled.

Once the unitary assembly 20 has been produced, it is subjected to a heat treatment, e.g., austenitizing at 1850°F for 15-40 minutes (depending upon the size of the cross section), or tempering at 1025-1100°F for one hour per inch of thickness. Thus, both the front and rear portions are simultaneously subjected to the same heat treatment and develop mechanical properties that are optimal for each material.

The unitary assembly 20 constitutes a semi-finished multi-metal tool holder blank whose front cutter head portion can be finished to form a desired cutter head configuration.

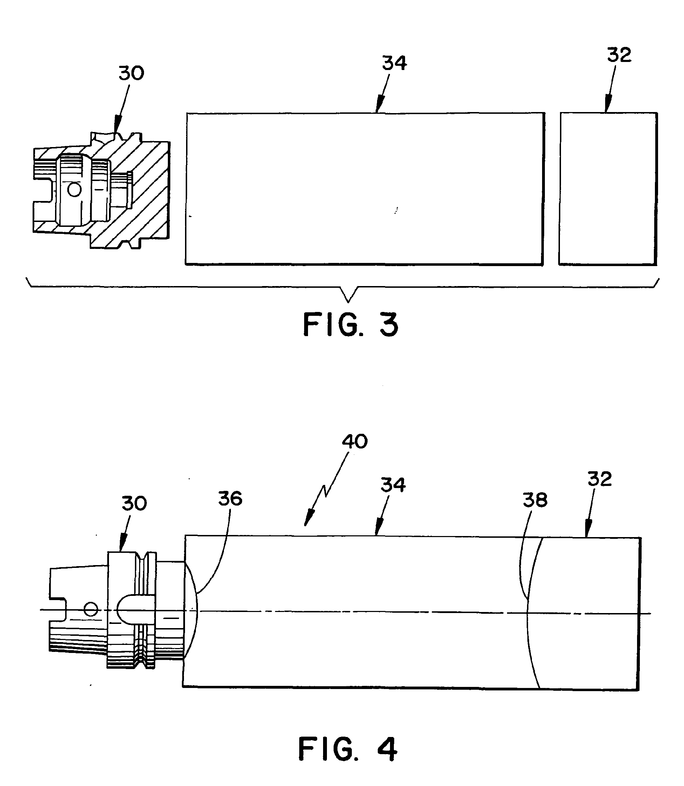

It will be appreciated that more than two portions could be friction welded in end-to-end relationship to form the unitary assembly. In that regard, attention is directed to a second embodiment of the invention, depicted in Figs. 3 and 4. That embodiment employs three portions, namely a rear portion 30, a front portion 32, and an intermediate portion 34. Those three portions are formed of respective materials having different mass properties and/or different chemical compositions. For example, the rear portion 30, like the earlier described rear portion 10, can comprise steel H13. The front portion 32 can comprise carbide, and the intermediate portion can comprise aluminum.

The three portions 30, 32, 34 are friction welded in end-to-end relationship in the manner described earlier, either sequentially or possibly simultaneously, to form a unitary assembly 40. The fusion line 36 between the rear and intermediate portions 30, 34, and the fusion line 38 between the front and intermediate portions 32, 34 are schematically represented in Fig. 2.

After the unitary assembly 40 has been thusly formed, it is subjected to a heat treatment, e.g., similar to the austenitizing or the tempering described earlier. Thus, all three portions 30, 32, 34 are subjected to the same heat treatment to develop mechanical properties that are optimal for each material.

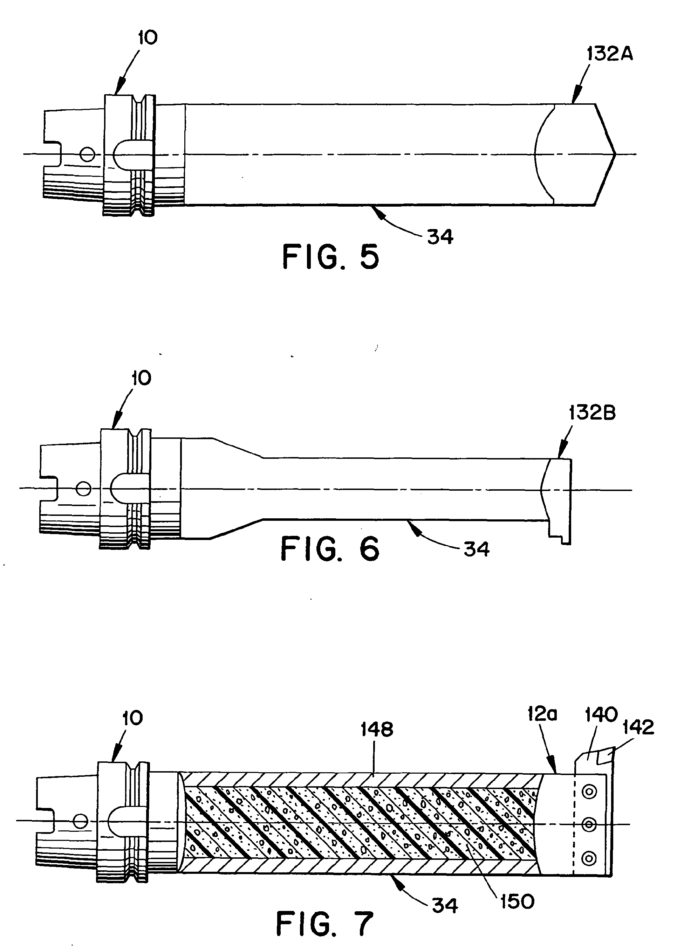

The front cutter head portion 32 of the semi-finished multi-metal tool holder blank will be eventually machined (finished) so as to constitute an appropriate cutter head configuration. Examples of finished cutter heads are shown in Figs. 5-7. Fig. 5 depicts a carbide cutter head 132A that has been machined to form a drill tip. Fig. 6 depicts a carbide cutter head 132B that has been machined to form a grooving tip. Fig. 7 depicts a steel cutter head 12A that has been machined to form a carrier for a cartridge 140 that supports an indexible cutter insert 142. Fig. 7 also shows that the intermediate portion 34 can comprise a hollow part 148 filled with a suitable anti-vibration material 150 such as plastic foam.

It will be appreciated that the materials from which the various portions 10, 12, 30, 32, 34 are formed are optional; materials other than those described could be employed.

Although the present invention has been described in connection with preferred embodiments thereof, it will be appreciated by those skilled in the art that additions, deletions, modifications, and substitutions not specifically described may be made without departing from the spirit and scope of the invention as defined.

## Claims

1. A tool holder comprising a plurality of portions arranged in end to-end relationship and interconnected by friction weld to form a unitary assembly subjected to a heat treatment; the portions formed of different respective materials having at least one of: different mass properties and different chemical compositions; a front-most one of the portions constituting a cutter head portion, and a rear-most one of the portions constituting a mounting portion.

2. The tool holder according to claim 1 wherein the rear portion is finished.

3. The tool holder according to claim 2 wherein the front portion is unfinished.

4. The tool holder according to claim 1 wherein the plurality of portions comprises more than two portions.

5. The tool holder according to claim 4 wherein the plurality of portions consists of three portions.

6. The tool holder according to claim 5 wherein the three portions comprise a steel rear portion, a carbide front portion, and an aluminum intermediate portion.

7. The tool holder according to claim 1 wherein the plurality of portions consists of two portions.

8. The tool holder according to claim 6 wherein the front portion comprises steel 4340, and the rear portion comprises steel H13.

9. A tool holder comprising a rear mounting portion, a front cutter head portion, and an intermediate portion interconnecting the front and rear portions; the front, rear, and intermediate portions formed of different respective materials having different mass properties and/or different chemical compositions, and interconnected in end-to-end fashion along an axis by friction welds to form a unitary assembly.

10. The tool holder according to claim 9 wherein the front portion comprises steel, the intermediate portion comprises aluminum, and the rear portion comprises carbide.

11. The tool holder according to claim 10 wherein the unitary assembly is heat treated.

12. The tool holder according to claim 9 wherein the unitary assembly is heat treated.

13. The tool holder according to claim 9, wherein the cutter head portion is unfinished.

14. The tool holder according to claim 9 wherein the intermediate portion includes a hollow metal part and an anti-vibration material disposed inside the hollow part.

15. A method of producing a tool holder, comprising the steps of:
A) providing a plurality of portions comprised of respective materials having different mass properties and/or different chemical compositions;
B) placing the plurality of portions in end-to-end relationship along a center axis;
C) friction welding the plurality of portions together to form a unitary assembly, wherein a rear-most one of the portions constitutes a mounting portion and a front-most one of the portions constitutes a cutter head; and
D) heat treating the unitary assembly.

16. The method according to claim 15 wherein step A comprises providing more than two portions.

17. The method according to claim 15 wherein step A comprises providing only two portions.

18. The method according to claim 15 wherein the cutter head of step C is in the form of an unfinished blank, and further comprising the step of machining the cutter head portion to a desired shape subsequent to step D.

19. The method according to claim 15 wherein step D comprises austenitizing.

20. The method according to claim 15 wherein step D comprises tempering.
